# EUROPEAN PATENT APPLICATION

(11) **EP 1 075 986 A1**
(43) Date of publication of application: **14.02.2001**
(21) Application number: 00306029.0
(22) Date of filing: 17.07.2000
(51) Int. Cl.: B60R 1/12, B60R 1/08

(54) **Vehicle mirror device**

(30) Priority: 09.08.1999 JP 22521999
(71) Applicant: Murakami Corporation, Shizuoka-shi, Shizuoka, 422-8065 (JP)
(72) Inventor: Nagao, Mitsuyoshi, Fujieda-shi, Shizuoka, 426-0041 (JP)
(74) Representative: Jehan, Robert

(57) **Abstract**

An inner mirror device (1) for a vehicle has a GPS antenna (5) and a GPS receiver (6) placed inside the inner mirror. Information such as latitude, longitude, altitude, direction and travelling speed, date and time received by the GPS receiver (6) is indicated on a display (11) placed in the inner mirror (1). Since the GPS antenna (5) and GPS receiver (6) are not placed outside the vehicle, they do not need to be stored in a waterproof case. Since the GPS antenna (5) and GPS receiver (6) are placed adjacent each other, the length of a harness connecting them together can be reduced. As a result, receiving characteristics can be enhanced.

## Description

The present invention relates to a vehicle mirror device in which a GPS antenna and preferably a GPS receiver may be disposed inside of an inner mirror mounted to a vehicle or placed at a proper position of a stay connected to the inner mirror.

Conventionally, a navigation system for an automobile and for which a GPS (global positioning system) is used is in widespread use. In this type of navigation system, latitude information and longitude information of a present position of a traveling vehicle are calculated based on signals from a plurality of artificial satellites (GPS satellites), the signals being received by a GPS antenna. Then, the pieces of information are corresponded to map data including road information, place-name information, and the like around the vehicle and read from a recording medium such as a CD-ROM or DVD-ROM. Map data for which the position of the traveling vehicle is indicated is displayed on a display screen. As a result, a driver can grasp where the vehicle is traveling at present and in which direction his/her destination is with accuracy and readiness.

In conventional GPS, the GPS antenna is disposed on an upper side (outer side of the vehicle) of a roof of the vehicle in order to receive the signals sent from the artificial satellites in a wide range. Therefore, it is necessary to consider the influence of weather conditions such as rainwater or a sudden change in temperature on the GPS antenna. Conventionally, material resistant to changes in temperature is used. The GPS antenna is stored in a housing with a waterproof structure and disposed on the upper side of the roof of the vehicle.

However, according to the above method, a waterproof case for storing the GPS antenna is required. Moreover, the fact that a GPS receiver is mounted inside the vehicle means that it is difficult to connect the GPS receiver with the GPS antenna, disposed on an outside of the vehicle, by a harness. Furthermore, the harness for connecting the GPS receiver and the GPS antenna is visible from outside the vehicle, which degrades the appearance.

A high-frequency signal passes through the harness connecting the GPS antenna and the GPS receiver. Therefore, if the length of the harness increases, the signal will be attenuated and the receiving characteristics of the GPS receiver will be degraded.

On the other hand, a mirror with a direction finder is described in Japanese Patent unexamined publication No. 57-116211 (hereafter referred to as prior art). This reference describes the detection of a traveling direction (direction of east, west, south, or north) of the vehicle by using a magnetic sensor and the display of the detected bearing information on a surface of an inner mirror. Thus, the driver can know the traveling direction of the vehicle.

However, since much magnetic noise is generated within the vehicle, the mirror with the direction finder, for which the magnetic sensor is used as disclosed in the above prior art, will be influenced by the magnetic noise so that it cannot detect an accurate reading. Therefore, it will be required to correct the detection error caused by the influence of the noise.

The present invention seeks to provide improved GPS signal reception in a vehicle.

According to an aspect of the present invention, there is provided a vehicle mirror device as specified in claim 1.

The preferred embodiment can provide an inner mirror system having a GPS antenna in which the GPS antenna and a GPS receiver can be mounted easily whereby information such as the travelling direction of a vehicle could be displayed accurately.

According to a preferred embodiment, an inner mirror device having a GPS antenna comprises a GPS antenna and a GPS receiver which are mounted inside of an inner mirror or placed in a proper position of a stay for mounting the inner mirror to the vehicle body. With this structure, waterproofing of the GPS antenna and the GPS receiver is not necessary. Since a signal sent from a satellite can be received from a wide range (angle) in front of the vehicle, the receiving characteristics will be enhanced.

Furthermore, if the GPS antenna and the GPS receiver are mounted inside of the inner mirror or placed around the inner mirror, the GPS antenna and the GPS will be placed adjacent to each other. Therefore, any harness which connects the GPS antenna with the GPS receiver can be made short. As a result, it solves the problem of an attenuated high-frequency signal.

If display is disposed in a proper position on the inner mirror and various information, such as the traveling direction of the vehicle, the current position of the vehicle (latitude, longitude, altitude, and the like), current time, and date, is displayed. The driver can easily recognize the various information.

Moreover, if a display switching switch (selecting means) is mounted, the information displayed on the display can be switched selectively. Therefore, the driver can recognize necessary information by selecting them properly.

An embodiment of the present invention is described below, by way of example only, with reference to the accompanying drawings, in which:
Figs. 1A to 1C show a structure of an embodiment of inner mirror device in which Fig. 1A is a front view, Fig. 1B is a side sectional view, and Fig. 1C is a plan view.
Fig. 2 is a block diagram showing a structure of a GPS unit.
Fig. 3 is a block diagram showing an inner structure of a GPS receiver.
Fig. 4 is an explanatory view showing a receiving range of a GPS antenna.
Figs. 5A and 5B are explanatory views showing an example in which a GPS unit is mounted inside a stay cover of an inner mirror, in which Fig. 5A is a front view and Fig. 5B is a side sectional view.
Figs. 6A and 6B are explanatory views showing an example in which the GPS unit is mounted to a stay of the inner mirror, in which Fig. 6A is a front view and Fig. 6B is a side sectional view.

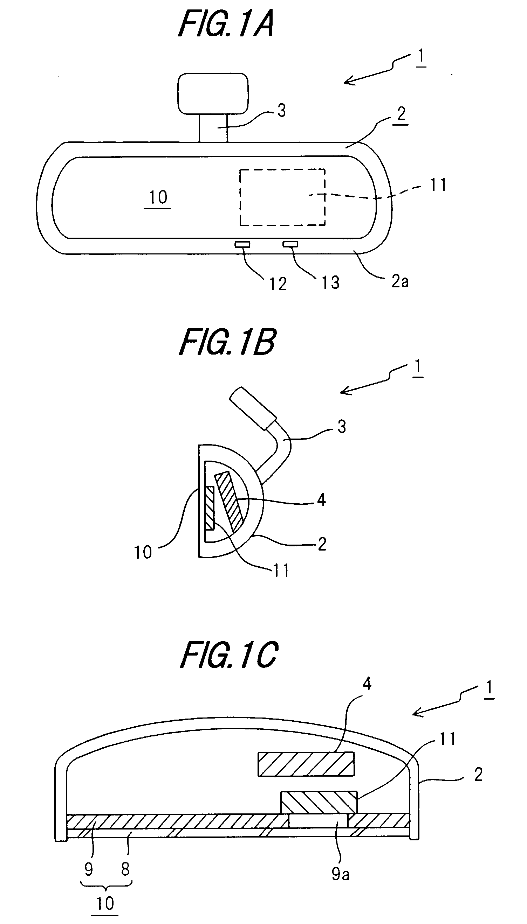

Referring to Figs. 1A to 1C, inner mirror device 1 is disposed in the vicinity of a central part of an upper portion of an inner side of a windshield of a vehicle. The inner mirror device 1 is composed of an inner mirror 2 and a stay 3 which connects the inner mirror 2 to a vehicle body.

Inside the inner mirror 2, a GPS unit 4 is provided. Furthermore, a mirror surface 10 having a two-layer structure of a half mirror 8 and a spacer 9 is disposed at an opening face of the inner mirror 2 (see Fig. 1C) . A rectangular notch portion 9a is formed at a proper position of the spacer 9. On an inner side of the notch portion 9a, a display (display means) 11 is disposed.

Although a portion of the mirror surface 10 is notched to place the display 11, it is not limited to this design. For example, the display 11 may be placed in any position separate from the mirror surface 10.

A mode selecting switch 12 for switching mode between display and non-display of the display 11 and a display switching switch (selecting means) 13 for switching the information to be displayed on the display 11 are provided on a lower portion of a frame 2a of the inner mirror 2(see Fig. 1A).

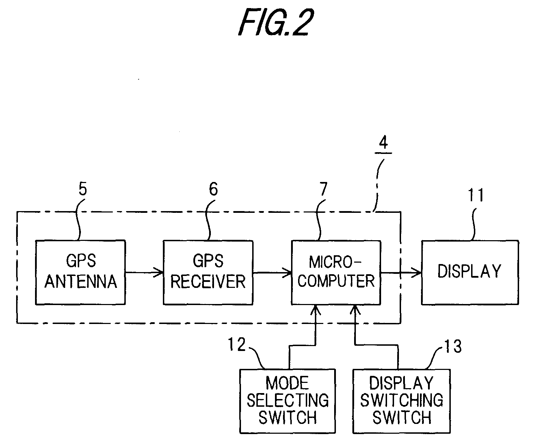

Fig. 2 is a block diagram showing an inner structure of the GPS unit 4. As shown in Fig. 2, the GPS unit 4 includes a GPS antenna 5 for receiving signals sent from a GPS satellite and a GPS receiver 6 for detecting a desired signal from the signals received by the GPS antenna 5. The GPS unit 4 also has a microcomputer (reading means) 7, in which various information such as latitude, longitude, and an altitude showing a position where the vehicle is traveling, a bearing showing a direction in which the vehicle is traveling, and a traveling speed of the vehicle, date, and time will be obtained from the signals detected by the GPS receiver 6.

The microcomputer 7 is connected to the mode selecting switch 12, the display switching switch 13, and the display 11. The microcomputer 7 conducts the processing of various display information obtained by the microcomputer 7 on the display 11 when a display mode of information is selected by the mode selecting switch 12. The microcomputer 7 conducts the processing of successive switching and displaying of the plurality of pieces of information on the display 11 in response to the operation of the display switching switch 13.

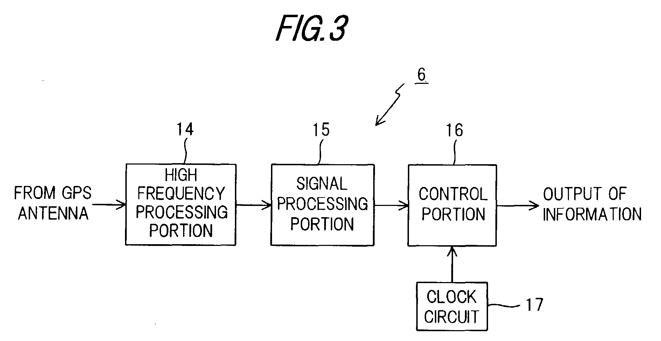

Fig. 3 is a block diagram showing an inner structure of the GPS receiver 6. As shown in Fig. 3, the receiver 6 is composed of a high frequency processing portion 14, a signal processing portion 15, a control portion 16, and a clock circuit 17.

The high frequency processing portion 14 conducts the conversion of the high-frequency signals received by the GPS antenna into those of the intermediate frequency band by multiplying the high-frequency signals by local-frequency signals generated from a local oscillator (not shown).

The signal processing portion 15 conducts the retrieval of the signals of a desired frequency band from the intermediate-frequency signals that have been converted by the high frequency processing portion 14, and detecting the retrieved signals.

The control portion 16 conducts processing to prepare information to which various information such as the latitude, longitude, altitude, bearing, speed, date, and time is added based on the signal detected by the signal processing portion 15 and outputting the information in a predetermined format.

An output signal of the GPS receiver 6 (output signal of the control portion 16) is output, for example, with a format of "NMEA0183". As is well known, a format parameter of "NMEA0183" is given as follows:

| | |
|---|---|
| a) Baud rate | ; 4800 bps |
| b) Data bit | ; 8 bits |
| c) Parity | ; None |
| d) Start bit | ; 1 bit |
| e) Stop bit | ; 1 bit |
| f) Transferred data | ; All ASCII |

Various output sentences can be obtained by the above format. For example, a character string as shown in the following (A) can be obtained as a RMC:
(A) 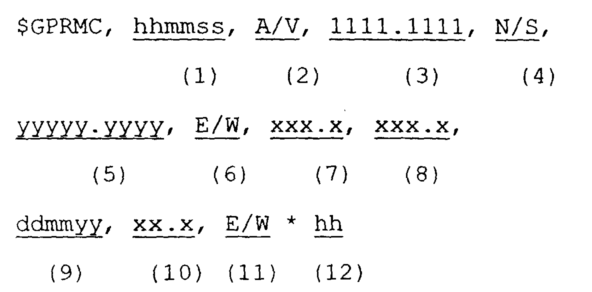
In the above (A), (1) to (12) have information shown in the following (B), respectively:
(B)

| | |
|---|---|
| (1) Time (World standard time) | hh : hour, mm : minute, ss : second |
| (2) Locating state | A: Locating, V: Locating impossible |
| (3) Latitude | degree, minute (decimal places indicate minutes) |
| (4) Latitude bearing | N: North latitude, S: South latitude |
| (5) Longitude | degree, minute (decimal places indicate minutes) |
| (6) Longitude bearing | E: East longitude, W: West longitude |
| (7) Speed | Unit (knot) |
| (8) Course | 0.0° to 359.9° (True north is defined as 0.0° , eastbound) |
| (9) Date | dd: day, mm: month, yy: year |
| (10) Magnetic correction | |
| (11) Magnetic correction bearing | E: East longitude, W: West longitude |
| (12) Checksum | |

Then, for example, if a data string as shown in the following (C) is given, the information shown in the following (D) can be obtained:
(C) 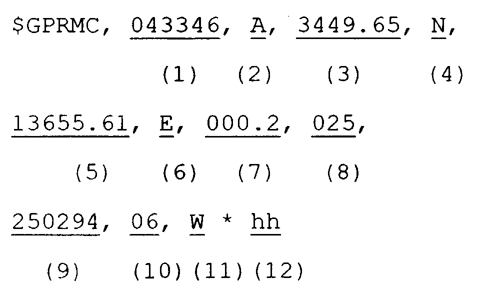
(D)

| | |
|---|---|
| (1) Time (World standard time) | 33 minutes and 46 seconds past 4 o'clock |
| (2) Locating state | Locating |
| (3) Latitude | 34 degrees, 49.65 minutes |
| (4) Latitude bearing | North latitude |
| (5) Longitude | 136 degrees, 55.61 minutes |
| (6) Longitude bearing | East longitude |
| (7) Speed | 0.2 knots |
| (8) Course | 25° (North-northeast) |
| (9) Date | February 25, 1994 |
| (10) Magnetic correction | 6 degrees |
| (11) Magnetic correction bearing | Westward |

In other words, by the microcomputer 7 shown in Fig. 2, the latitude, longitude, bearing, speed, date, and time can be read from the above information. Detailed description of the altitude information will be omitted, but the altitude information can be read from a character string of an output sentence GGA (position information) with the format of "NMEA0183".

Next, operation of the embodiment constructed as above will be described. When a driver turns on a power switch (not shown) of the GPS unit 4, the transmitted signal sent from the GPS satellite is received by the GPS antenna and provided to the GPS receiver 6.

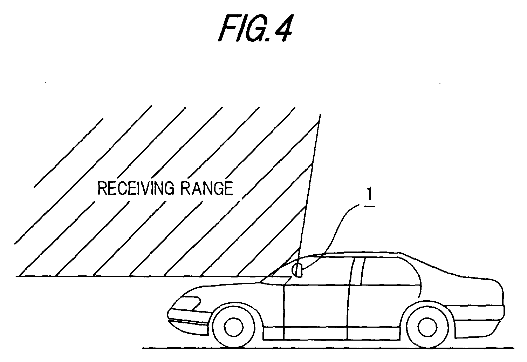

Fig. 4 is an explanatory view showing a receiving range of the GPS antenna mounted inside the inner mirror device 1. As shown in Fig. 4, the GPS antenna mounted to the inner mirror device 1 can receive the signal sent from the satellite in the wide range in front of the vehicle.

The received signal (high-frequency signal) provided to the GPS receiver 6 is converted into the signal of the intermediate frequency band at the high frequency processing portion 14 shown in Fig. 3. Then, the desired signal is detected at the signal processing portion 15. Next, various information such as the latitude, longitude, altitude, bearing, speed, date, and time will be prepared from the detected signal and outputted in the form of the predetermined format (format of the above "NMEA0183") at the control portion 16. The various information thus obtained and time information provided by the clock circuit 17 are read by the microcomputer 7.

When the driver operates the mode selecting switch 12 mounted to the inner mirror 2, shown in Fig. 1A, to select the display mode, the display 11 illuminates and, for example, bearing information will be displayed on the display 11 as one of the various information read by the microcomputer 7.

At this time, since a back face side of the half mirror 8 is illuminated through the notch portion 9a of the spacer 9 forming the mirror surface 10, the bearing information displayed on the display 11 is shown through the half mirror 8. As a result, the driver can visually recognize the information displayed on the display 11.

If the display switching switch 13 is pressed, processing of changing the information displayed on the display 11 will be conducted by the control of the microcomputer 7. In other words, everytime the driver presses the display switching switch 13, the information displayed on the display 11 will be changed sequentially, e.g., bearing, latitude, longitude, speed, altitude, the date, and the time. Thus, the driver can select the information that he/she wants to know and have it displayed on the display 11 to recognize the information.

If the driver does not want the information to be displayed on the display 11, he/she can switch the mode selecting switch 12 to a non-display mode. As a result, the display 11 is turned off, and thus, the back face side of the notch portion 9a shown in Fig. 1C is darkened, which makes the entire mirror surface 10 a reflecting mirror to reflect the light from the rear.

Therefore, the driver can select the display or non-display mode of the information on the display 11 by operating the mode selecting switch 12. When the display mode of the information is selected, the necessary information will be displayed by the operation of display switching switch 13.

Thus, in the inner mirror device 1 having the GPS antenna according to the embodiment, the transmitted signal sent from the GPS satellite can be received by the GPS antenna 5 and various information (bearing, latitude, longitude, speed, altitude, the date, the time, and the like) obtained from the received signal can be displayed on the display 11. Therefore, the driver can easily recognize the various information.

Because the GPS antenna 5 is placed at the upper portion of the windshield, it is possible to widen the receiving range, which enables a receiving sensitivity to be satisfactory. Moreover, because both the GPS antenna 5 and GPS receiver 6 are placed inside of the inner mirror 2, the length of the harness connecting the GPS antenna 5 to the GPS receiver 6 can be reduced. As a result, the signals received through the harness between the GPS antenna and the GPS receiver 6 can be prevented from attenuating.

Since the GPS antenna 5 is disposed inside the vehicle, it is unnecessary for the GPS antenna 5 to be housed in a case or the like with the waterproof structure. Moreover, since it is unnecessary to place the harness for connecting the GPS antenna 5 and the GPS receiver 6 outside the vehicle, the appearance will be enhanced.

Furthermore, because the direction in which the vehicle is traveling will be obtained based on the present position of the vehicle in the embodiment, as compared with the method described in Japanese Patent unexamined publication No. 57-116211, the magnetic correction or the like is not required and the bearings can be detected with high accuracy. When the display 11 is switched to the non-display mode by the mode selecting switch 12, the entire half mirror 8 functions as the mirror surface which reflects the image of the rear field of view so that the rear visibility will not be impaired.

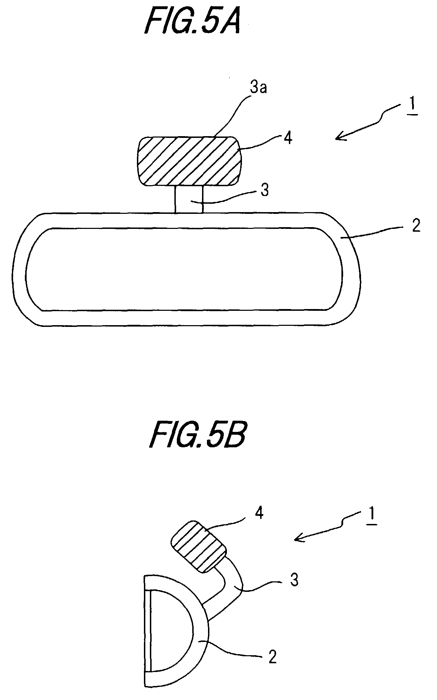

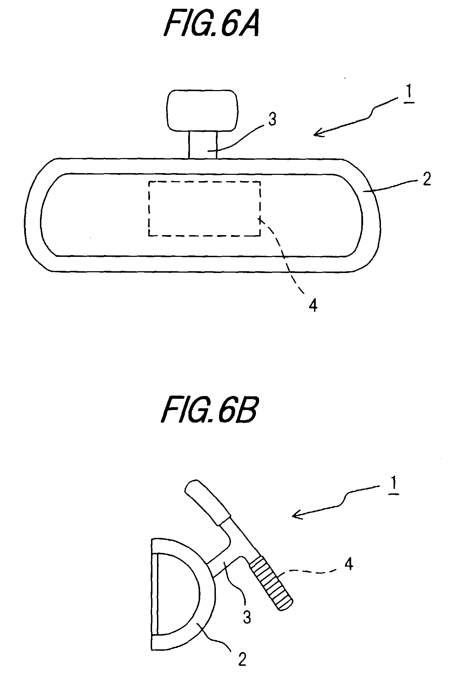

A position to which the GPS unit 4 is mounted can be changed in various ways. For example, the GPS unit 4 may be mounted inside a stay cover 3a of the stay 3 as shown in Figs. 5A and 5B or may be mounted to the stay 3 as shown in Figs. 6A and 6B.

Although an example in which the GPS unit 4 which includes the GPS antenna 5 and the GPS receiver 6 is mounted inside or placed around the inner mirror 2 is described in the above embodiment, it is also possible to place only the GPS antenna 5 and GPS receiver 6 inside or around the inner mirror 2 and place the display 11 for displaying the information separately at a proper position in the vehicle.

Moreover, it is possible to locate only the GPS antenna 5 inside or at a portion around the inner mirror 2, while the GPS receiver 6 and the display 11 are disposed separately at a proper position in the vehicle.

It is also possible for the signals received by the GPS antenna 5 placed inside the inner mirror 2 to be connected with a car navigation system placed inside the vehicle so that the present location of the vehicle will be displayed on a map.

Although the GPS receiver 6 having the structure shown in Fig. 3 has been described as an example according to the above embodiment, it is not intended to be limited to the details shown, but may be replaced by one having similar functions.

Although one of the examples in which the mode selecting switch 12 and display switching switch 13 are respectively mounted to the frame 2a of the inner mirror 2 has been described in the above embodiment, the positions that the mode selecting switch 12 and display switching switch 13 are mounted will not be limited to the frame 2a but may be suitably mounted any place inside the vehicle.

The inner mirror is preferably the rear view mirror of the vehicle or another internal mirror.

It is also envisaged that the system could be housed within an external side mirror.

The disclosures in Japanese patent application number H11-225219, from which this application claims priority, and in the abstract accompanying this application are incorporated herein by reference.

## Claims

1. A vehicle mirror device including a mirror housing (2), a fixing stay (3) for fixing the mirror housing to a vehicle, a GPS antenna (5) disposed inside the mirror housing or on or in the stay (3).

2. A vehicle mirror device as in claim 1, including a GPS receiver (6) disposed inside the mirror housing (2) or in or on the stay (3).

3. A vehicle mirror device as in claim 2, including reading means for reading at least one of the following data detected by the GPS receiver: longitude, latitude, altitude, travelling direction, date and time.

4. A vehicle mirror device as in claim 3, including display means (11) for displaying information read by the reading means.

5. A vehicle mirror device as in claim 4, including a mode selecting switch (12) for switching between display and non-display modes of information read by the reading means.

6. A vehicle mirror device as in any one of claims 2 to 5, including selecting means for selecting one from a plurality of data read by the reading means.

7. A vehicle mirror device as in any preceding claim, wherein the device is a vehicle internal device.

8. A vehicle mirror device as in claim 7, wherein the device is a rear view mirror assembly.

9. A vehicle including a vehicle mirror device as in any preceding claim.
